# EUROPÄISCHE PATENTSCHRIFT

(11) **EP 1 472 065 B1**
(45) Veröffentlichungstag und Bekanntmachung des Hinweises auf die Patenterteilung: **27.09.2006**
(21) Anmeldenummer: 02787766.1
(22) Anmeldetag: 22.11.2002
(51) Int. Cl.: B29C 44/34

(54) **VORRICHTUNG ZUM SPRITZGIESSEN VON GESCHÄUMTEN FORMTEILEN**
APPARATUS FOR INJECTION MOULDING EXPANDED MOULDED PARTS
DISPOSITIF POUR LE MOULAGE PAR INJECTION DE PIECES MOULEES EXPANSEES

(30) Priorität: 07.02.2002 DE 10205003
(43) Veröffentlichungstag der Anmeldung: 03.11.2004
(73) Patentinhaber: Carl Freudenberg KG, 69469 Weinheim (DE)
(72) Erfinder: RYZKO, Peter, 69502 Hemsbach (DE)
(86) Internationale Anmeldenummer: PCT/EP2002/013106
(87) Internationale Veröffentlichungsnummer: WO 2003/066306

(56) Entgegenhaltungen:
- DE-A- 1 961 136
- DE-A- 19 853 021

## Beschreibung

Die Erfindung betrifft eine Vorrichtung zum Spritzgießen von geschäumten Formteilen gemäß dem Oberbegriff der Anspruchs 1, wobei eine von einem Spritzaggregat gelieferte Polymerschmelze begast und in ein Formwerkzeug eingespritzt wird.

Beim Spritzgießen von geschäumten Formteilen wird die Polymerschmelze begast. Hierzu ist aus der DE 198 53 021 A1 eine gattungsgemäße Vorrichtung bekannt, bei der die Polymerschmelze kontinuierlich durch eine Begasungsdüse geführt wird, die poröse Düsenwandungen aufweist, aus denen das Gas der Polymerschmelze zugeführt wird. Die Begasungsdüse kann hierbei auch als Ringdüse ausgeführt sein, wobei das Innenteil der Ringdüse von einem allseitig von der Polymerschmelze umströmten sog. Torpedo gebildet wird, der ebenfalls poröse, der Gaszufuhr dienende Wände aufweist.

Da die Begasung der Polymerschmelze während des Spritzvorgangs erfolgt, steht für die Begasung nur eine beschränkte Begasungszeit zur Verfügung. Dies gilt auch, wenn die Polymerschmelze nicht unmittelbar während des Einspritzvorgangs, sondern während eines Dosiervorgangs begast wird.

Die Begasungsgüte hängt von der Temperatur derPolymerschmelze, dem Druck und insbesondere aber auch von der Begasungszeit ab. Da diese Begasungszeit bei dem bekannten Verfahren nicht oder nicht wesentlich beeinflussbar ist, kann vielfach die Begasungsgüte nicht optimal erreicht werden.

Aufgabe der Erfindung ist es daher, eine Vorrichtung der eingangs genannten Gattung so auszubilden, dass eine kontrollierte und gesteuerte Begasung von Polymerschmelzen unabhängig von dem Spritzvorgang ermöglicht wird.

Diese Aufgabe wird bei einer Vorrichtung der eingangs genannten Art erfindungsgemäß dadurch gelöst, dass eine einen Begasungshohlraum enthaltende, gesonderte Begasungseinrichtung wahlweise mit dem Ausgang des Spritzaggregats und der Einspritzöffnung des Formwerkzeugs verbindbar ist, und dass die begaste Polymerschmelze aus dem Begasungshohlraum durch eine Verdrängungseinrichtung ausspritzbar ist.

Der Begasungshohlraum, in dem das Gas in die Polymerschmelze eingebracht wird, bildet den die Polymerschmelze aufnehmenden Vorbegasungsspeicher. Da dieser Begasungshohlraum aber nicht mit einer vom Einspritzvorgang oder dem Spritzgießvorgang abhängigen Strömungsgeschwindigkeit durchströmt wird, sondern die Polymerschmelze so lange aufnimmt, wie dies für den Begasungsvorgang erforderlich und erwünscht ist, kann die Begasungszeit optimal gewählt werden. Außerdem können in der gesonderten Begasungseinrichtung die Temperatur und der Druck frei gewählt werden, so dass auch diese Verfahrensparameter in jeweils für den Begasungsvorgang optimaler Weise vorgegeben und eingehalten werden können.

Der Begasungsvorgang ist hierbei sowohl von dem Einspritzvorgang als auch von dem Spritzgießvorgang entkoppelt und kann deshalb hinsichtlich der Begasungszeit, der Temperatur und des Drucks unter den für die Begasungsgüte optimalen Bedingungen durchgeführt werden. Insbesondere ist auch eine zuverlässige Überwachung des Begasungsvorgangs ermöglicht. Es wird eine homogene und reproduzierbare Schmelzebegasung sichergestellt. Dadurch sind die Aufschäumgrade der hergestellten Bauteile sehr genau und reproduzierbar einstellbar, was zu einer Verbesserung der Bauteilqualität führt. Mit der Vorrichtung können bisher nicht erreichbare Aufschäumgrade von Bauteilen realisiert werden.

Die Verdrängungseinrichtung, die die begaste Polymerschmelze nach Beendigung des Begasungsvorgangs ausspritzt, weist vorzugsweise einen in den Begasungshohlraum einführbaren Verdrängungskolben auf, der mit einer Antriebseinrichtung verbunden ist. Die Antriebseinrichtung kann vorzugsweise eine druckmittelbetätigte Kolben-Zylinder-Einheit sein.

Gemäß einer bevorzugten Ausführungsform der Erfindung ist vorgesehen, dass der Begasungshohlraum mindestens ein zwischen einer jeweils an die Gaszuführeinrichtung angeschlossenen, inneren porösen Kanalwand und einer äußeren porösen Kanalwand angeordneter Begasungskanal ist, in den der dem Kanalquerschnitt angepasste Verdrängungskolben einführbar ist

Weitere vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist. Es zeigt:
Fig. 1 in einer vereinfachten Darstellung im Schnitt eine Spritzgießeinrichtung mit einer Begasungseinrichtung in der Stellung beim Befüllung der Begasungseinrichtung,
Fig. 2-4 in Teildarstellungen entsprechend der Fig. 1 aufeinander folgende Verfahrensschritte und
Fig. 5 und 6 abgewandelte Querschnittsformen des Begasungshohlraums der Begasungseinrichtung.

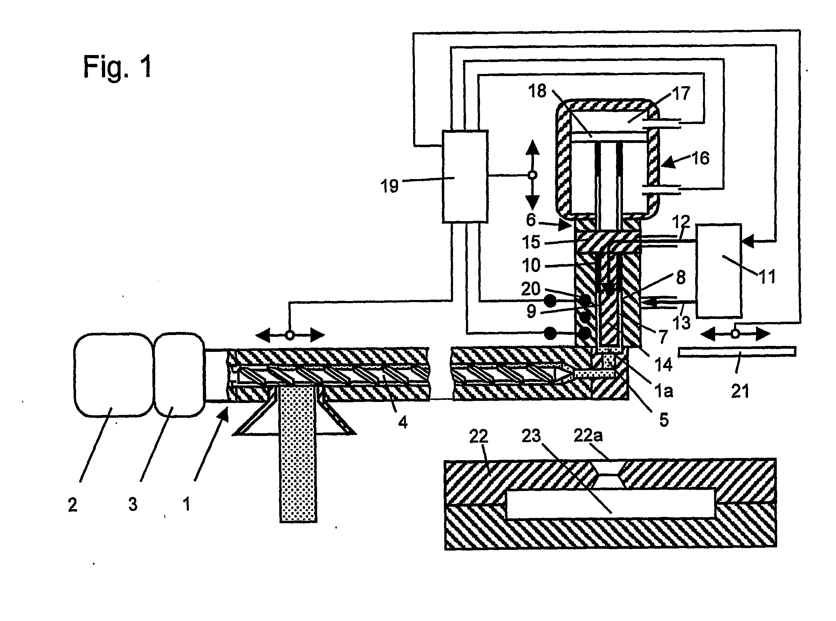

Die in Fig. 1 dargestellte Spritzgießeinrichtung weist ein herkömmliches Spritzaggregat 1 auf, in dem eine durch einen Motor 1 über ein Getriebe 3 angetriebene Extruderschnecke 4 das zugeführte Polymermaterial am Ausgang 1 a des Spritzaggregates 1 einer Düse 5 zuführt.

In der in Fig. 1 gezeigten Stellung ist die Düse 5 an eine Begasungseinrichtung 6 angeschlossen. Die Begasungseinrichtung 6 weist einen Begasungshohlraum 7 auf, in den die Polymerschmelze aus der Düse 5 eingespritzt wird.

Bei dem dargestellten Ausführungsbeispiel ist der Begasungshohlraum 7 zwischen einer äußeren porösen Kanalwand 8 und einer inneren porösen Kanalwand 9 ausgebildet. Die porösen Kanalwände 8 und 9 können beispielsweise aus Sinterkeramik oder Sintermetall bestehen. Der Begasungshohlraum 7 ist ein Ringraum, in den ein dem Hohlraumquerschnitt angepasster, als Ringkolben ausgeführter Verdrängungskolben 10 einführbar ist.

Die porösen Kanalwände 8 und 9 sind an eine Gaszuführeinrichtung 11 angeschlossen, die über Gasleitungen 12 und 13 das zur Begasung der Polymerschmelze erforderliche Gas liefert. Die innere poröse Kanalwand 9 wird durch einen zentralen, porösen Kern 14 gebildet, der von einem der Gaszufuhr dienenden Steg 15 getragen wird.

Der Verdrängungskolben 10 ist durch eine druckmittelbetätigte Kolben-Zylinder-Einheit 16 betätigbar, in deren Zylinderraum 17 ein Antriebskolben 18 durch Druckmittelbeaufschlagung wahlweise nach oben und unten bewegbar ist.

Eine Steuereinrichtung 19 steuert die Horizontalbewegung des beweglichen Spritzaggregats 1 und die Vertikalbewegung der ebenfalls beweglichen Begasungseinrichtung 6. Wie in Fig. 1 schematisch angedeutet ist, steuert die Steuereinrichtung 19 auch die Gaszuführeinrichtung 11 sowie die Druckmittelzufuhr zur Kolben-Zylinder-Einheit 16. Eine in Fig. 1 als Heizschlange angedeutete Heizeinrichtung 20 für die Begasungseinrichtung 6 wird ebenfalls von der Steuereinrichtung 19 gesteuert. Schließlich steuert die Steuereinrichtung 19 auch eine in Fig. 1 nur schematisch angedeutete Verschlusseinrichtung 21 für die Begasungseinrichtung 6.

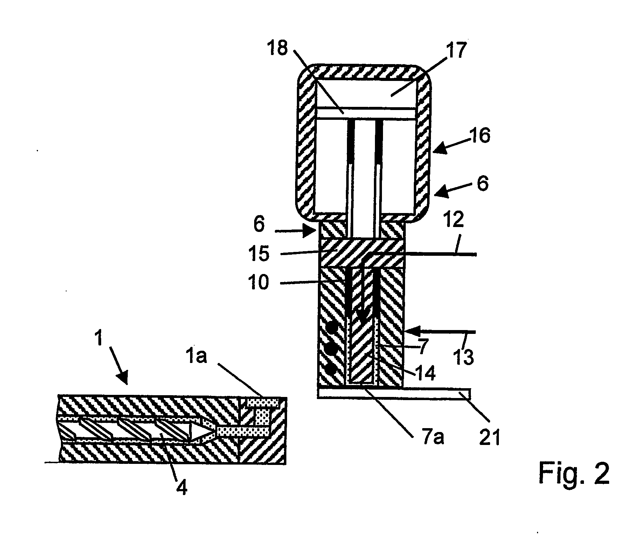

Nachdem in der in Fig. 1 gezeigten Stellung der Begasungshohlraum 7 der Begasungseinrichtung 6 durch das Spritzaggregat 1 mit Polymerschmelze gefüllt wurde, wobei der Verdrängungskolben 10 nach oben bewegt wurde, wird das Spritzaggregat 1 zurückgezogen und der Begasungshohlraum 7 der Begasungseinrichtung 6 wird durch die Verschlusseinrichtung 21 verschlossen, wie in Fig. 2 dargestellt ist.

Die in dem Begasungshohlraum 7 aufgenommene Polymerschmelze wird durch Zufuhr von Gas durch die äußere poröse Kanalwand 8 und die innere poröse Kanalwand 9 begast. Die Begasungszeit und die Menge des zugeführten Gases sind hierbei frei wählbar, um den gewünschten Begasungsgrad zu erreichen. Zugleich kann die optimale Begasungstemperatur mittels der Heizeinrichtung 20 eingestellt und aufrecht erhalten werden. Der jeweils gewünschte Druck im Begasungshohlraum 7 wird durch Beaufschlagung des Kolbens 18 und damit des Verdrängungskolbens 8 eingestellt.

Aus dieser Stellung wird die den Begasungsspeicher bildende Begasungseinrichtung 6 auf ein Formwerkzeug 22 abgesenkt und nach Öffnen der Verschlusseinrichtung 21 an eine Einspritzöffnung 22a des Formwerkzeugs 22 angeschlossen.

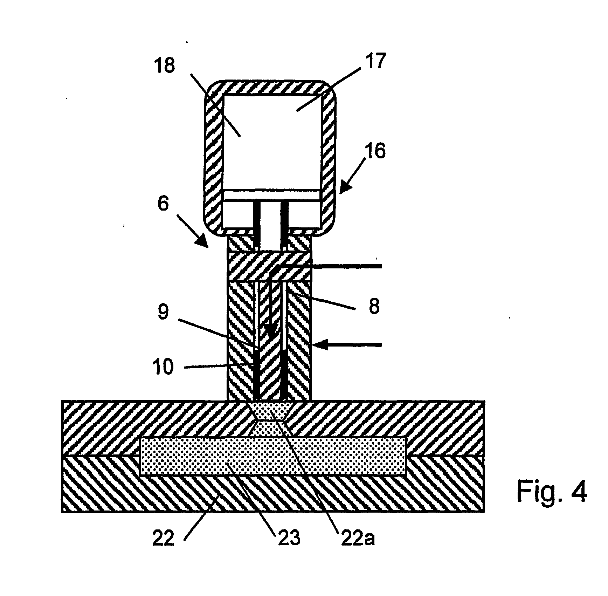

Wie in Fig. 4 gezeigt, wird sodann durch Beaufschlagung des Antriebskolbens 18 der Verdrängungskolben 8 vorgeschoben, so dass er die begaste Polymerschmelze in den Formhohlraum 23 des Formwerkzeugs 22 einspritzt. Am Ende des Einspritzvorgangs wird der erforderliche Nachdruck ebenfalls durch den Verdrängungskolben 8 erzeugt.

Danach kehren die Begasungseinrichtung 6 und das Spritzaggregat 1 wieder in die in Fig. 1 gezeigte Ausgangsstellung zurück; die Begasungseinrichtung 6 kann erneut befüllt werden.

Abweichend von dem stark vereinfacht dargestellten Ausführungsbeispiel kann eine Spritzgießeinrichtung auch mehrere Begasungseinrichtungen 6 aufweisen. Dies ist zweckmäßig, wenn die verfahrenstechnisch vorgegebene Begasungszeit wesentlich länger ist als die Zeit für die Bauteilherstellung im Spritzgießvorgang.

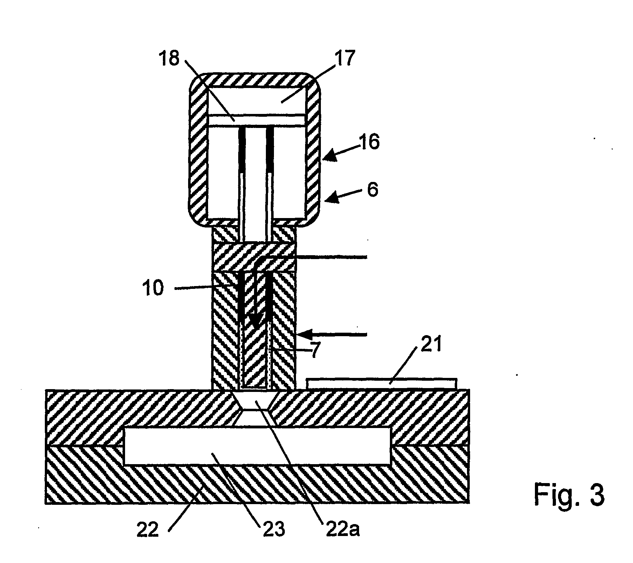

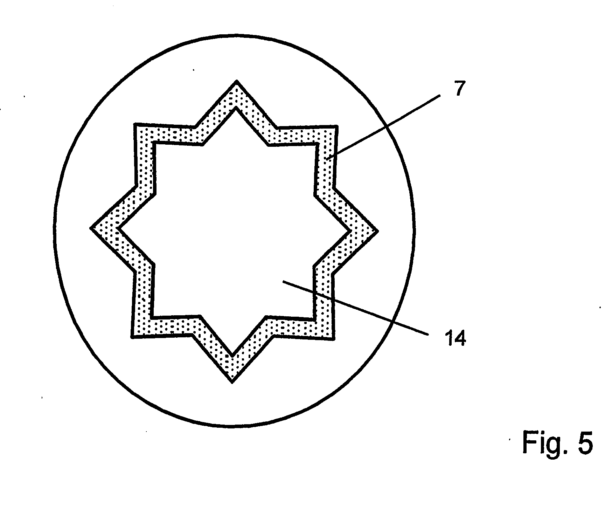

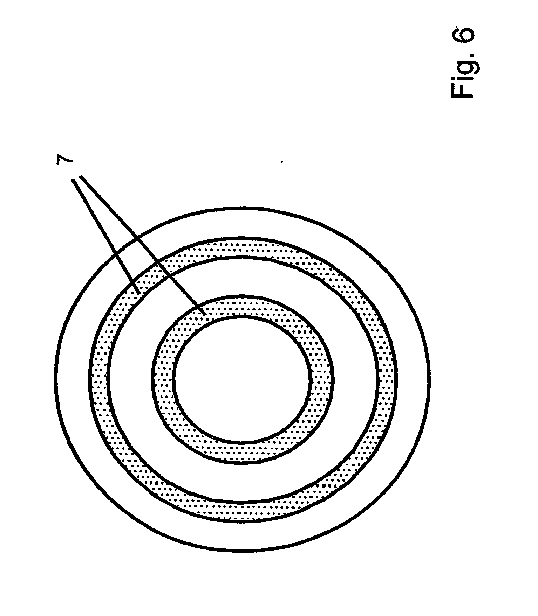

Die Verwendung der gesonderten Begasungseinrichtung 6 schafft auch die Möglichkeit, die aktive Begasungsoberfläche zu erhöhen, um dadurch den Begasungsvorgang günstig zu beeinflussen, insbesondere die Begasungszeit zu verringern und die Begasungsgüte zu erhöhen. Während beim Beispiel nach den Fig. 1-4 ein kreisringförmiger Querschnitt des Begasungshohlraums 7 angenommen wurde, sind in den Fig. 5 und 6 abgewandelte Begasungsquerschnitte mit demgegenüber erhöhter Begasungsoberfläche dargestellt. Gemäß Fig. 5 ist der Querschnitt des Begasungshohlraums 7 beispielsweise sternförmig, während beim Ausführungsbeispiel nach Fig. 6 eine konzentrische Mehrfachanordnung von (beim dargestellten Beispiel zwei) kreisringförmigen Begasungshohlräumen 7 gewählt wurde.

## Patentansprüche

1. Vorrichtung mit einem Spritzaggregat und einem Formwerkzeug sowie einer Begasungseinrichtung mit porösen, an eine Gaszuführeinrichtung angeschlossenen Wänden, **dadurch gekennzeichnet, dass** eine einen Begasungshohlraum (7) enthaltende, gesonderte Begasungseinrichtung (6) wahlweise mit dem Ausgang (1a) des Spritzaggregats (1) und der Einspritzöffnung (22a) des Formwerkzeugs (22) verbindbar ist, und dass die begaste Polymerschmelze aus dem Begasungshohlraum (7) durch eine Verdrängungseinrichtung (10, 16) ausspritzbar ist.

2. Vorrichtung nach Anspruch 1, **dadurch gekennzeichnet, dass** die Verdrängungseinrichtung einen in den Begasungshohlraum (7) einführbaren Verdrängungskolben (10) ausweist, der mit einer Antriebseinrichtung verbunden ist.

3. Vorrichtung nach Anspruch 2, **dadurch gekennzeichnet, dass** die Antriebseinrichtung eine druckmittelbetätigte Kolben-Zylinder-Einheit (16) ist.

4. Vorrichtung nach Anspruch 2, **dadurch gekennzeichnet, dass** der Begasungshohlraum (7) mindestens ein zwischen einer jeweils an die Gaszuführeinrichtung (11) angeschlossenen, inneren porösen Kanalwand (9) und einer äußeren porösen Kanalwand (8) angeordneter Begasungskanal ist, in den der dem Kanalquerschnitt angepasste Verdrängungskolben (10) einführbar ist.

5. Vorrichtung nach Anspruch 2, **dadurch gekennzeichnet, dass** die Begasungseinrichtung (6) mit einer Heizeinrichtung (20) verbunden ist.

## Claims

1. Apparatus with an injection unit and a mould as well as a mechanical blowing device with porous walls connected to a gas supply device, **characterized in that** a separate mechanical blowing device (6), containing a blowing cavity (7), can be optionally connected to an output (1a) of the injection unit (1) and the injection opening (22a) of the mould (22), and **in that** the polymer melt supplied with gas can be ejected from the blowing cavity (7) by a displacement device (10, 16).

2. Apparatus according to Claim 1, **characterized in that** the displacement device has a displacement plunger (10), which can be introduced into the blowing cavity (7) and is connected to a drive device.

3. Apparatus according to Claim 2, **characterized in that** the drive device is a piston-cylinder unit (16) actuated by a pressure medium.

4. Apparatus according to Claim 2, **characterized in that** the blowing cavity (7) is at least one blowing channel, which is arranged between an inner porous channel wall (9), respectively connected to the gas supply device (11), and an outer porous channel wall (8) and into which the displacement plunger (10) can be introduced, said plunger being adapted to the cross section of the channel.

5. Apparatus according to Claim 2, **characterized in that** the mechanical blowing device (6) is connected to a heating device (20).

## Revendications

1. Dispositif avec un ensemble d'injection et un outil de moulage ainsi qu'avec un dispositif de gazage avec des parois poreuses raccordées à un système d'arrivée de gaz, **caractérisé en ce qu'**un système de gazage séparé (6), comportant une chambre de gazage creuse (7), peut être raccordé au choix à la sortie (1a) de l'ensemble de gazage (1) et à l'ouverture d'injection (22a) de l'outil de moulage (22), et **en ce que** le bain de polymère gazé peut être éjecté hors de la chambre de gazage creuse (7) par un système de refoulement (10, 16).

2. Dispositif selon la revendication 1, **caractérisé en ce que** le système de refoulement comprend un piston de refoulement (10) pouvant être introduit dans la chambre de gazage creuse (7), et qui est relié à un dispositif d'entraînement.

3. Dispositif selon la revendication 2, **caractérisé en ce que** le dispositif d'entraînement est une unité à piston-cylindre (16) actionnée par un fluide sous pression.

4. Dispositif selon la revendication 2, **caractérisé en ce que** la chambre de gazage creuse (7) est au moins un canal de gazage disposé entre une paroi de canal poreuse intérieure (9), raccordée chaque fois au système d'arrivée de gaz (11), et une paroi de canal poreuse extérieure (8), et dans lequel le piston de refoulement (10) adapté à la section transversale du canal peut être introduit.

5. Dispositif selon la revendication 2, **caractérisé en ce que** le système de gazage (6) est raccordé à un système de chauffage (20).
